# EUROPEAN PATENT APPLICATION

(11) **EP 0 673 105 A2**
(43) Date of publication of application: **20.09.1995**
(21) Application number: 95301097.2
(22) Date of filing: 21.02.1995
(51) Int. Cl.: H02K 23/64, H02K 15/03, H02K 1/14, H02K 1/02, H02K 1/22

(54) **Electric motor having permanent magnet brake**

(30) Priority: 22.02.1994 US 199472; 12.09.1994 US 304461
(71) Applicant: Black & Decker Inc., Newark Delaware 19711 (US)
(72) Inventor: Du, Hung T., Baltimore, Maryland 21207 (US); Mason, John G., Rising Sun, Maryland 21911 (US); Beckhardt, Robert L., Timonium, Maryland 21093 (US)
(74) Representative: Stagg, Diana Christine

(57) **Abstract**

An electric motor such as a universal series wound motor having permanent magnetic segments (38,40) mounted within slots formed in the poles (14,16) of the stator. The permanent magnets are precisely positioned and securely retained within the slots with an injected metal bonding agent having very stable mechanical properties even under severe temperature conditions. The permanent magnets ensure that a predetermined level of braking current exists when the armature is short circuited to effectively dynamically brake the motor. The AC supply signal is rectified to prevent demagnetization of the permanent magnets and to avoid overheating of the permanent magnets and the armature caused by the continuous changing of polarity of the AC supply signal. An alternative embodiment describes a modified armature core construction that sufficiently reduces eddy current losses to offset the addition of the permanent magnet braking members.

## Description

### Background and Summary of the Invention

The present invention relates to electric motors and, in particular, to a permanent magnet brake for such motors.

In many motor applications, particularly with portable tools and appliances, it is desirable to brake the motor armature once power to the motor has been interrupted. Especially with universal (AC/DC) or series wound motors which are conventionally operated at speeds as high as 30,000 rpm, the inertia of the motor armature, as well as the functional elements such as circular saw blades connected thereto, may result in an undesirably long coast down period before the motor comes to a complete stop. Consequently, braking systems for such applications are frequently provided.

Motor braking is typically accomplished in one of two general ways: (*i*) by mechanical means by the application of some type of friction device, and (*ii*) by electrical braking or dynamic braking means by altering the connections to the motor. In typical dynamic braking systems for power tool applications, release of the trigger switch simultaneously or sequentially interrupts the flow of electrical power to the tool and effects a reversal of polarity in the armature windings of the motor. Due to the residual magnetic field in the stator, a self-excited electromagnetic field is generated opposing the continued rotation of the motor armature in the original running direction, thereby arresting further rotation. However, this form of dynamic braking can result in undesirably rapid deceleration and can also result in the generation of high currents causing excessive arcing between the brushes and commutator, thereby shortening motor life. In addition, due to the cyclical nature of the AC supply signal, the magnitude of the remnant magnetic field which is determined by the particular point in the AC waveform when the power is interrupted, is not consistent and may be insufficient to cause appropriate braking action.

It is also known to provide dynamic braking of a universal motor by providing one or more secondary brake windings that are selectively connected to the motor armature when power to the primary field windings is terminated. An example of such a system is described and illustrated in U.S. Patent to Mason et al., No. 5,063,319, and assigned to the assignee of the present application.

Recently, it has been proposed in U.S. Patent to Behrens et al., No. 5,087,845, to include a permanent braking magnet that is attached to the stator adjacent to the rotor. The inclusion of a permanent magnet between the stator and the rotor serves to provide a predetermined braking field that opposes the normal rotation of the motor when the armature is short circuited. While the use of a permanent magnet braking member overcomes some of the problems associated with more conventional dynamic braking systems, such as excessive arcing and the variability of the remnant electromagnetic field, experience has identified other problems.

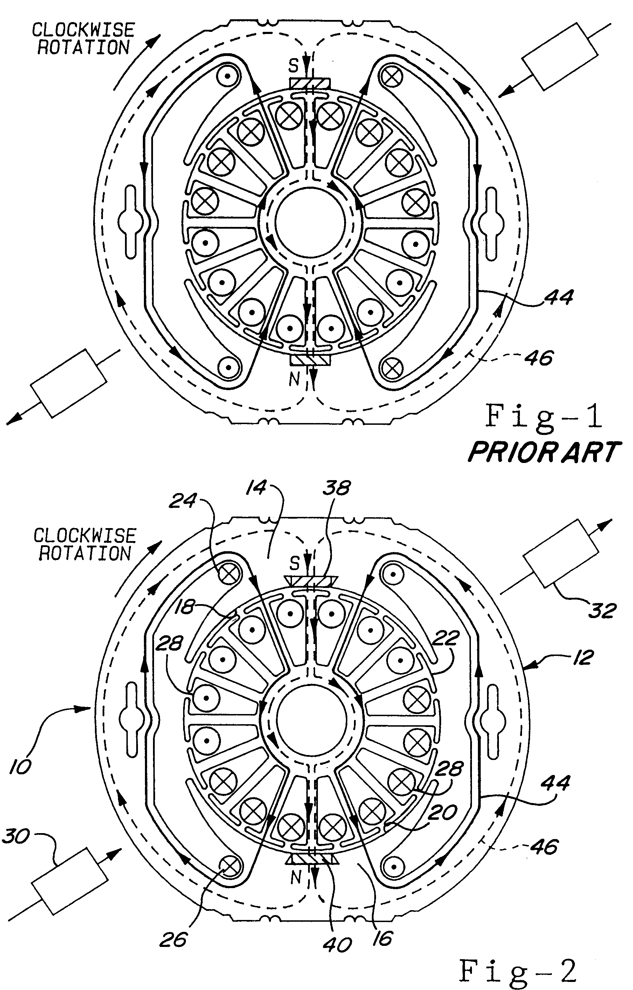

These shortcomings can best be explained with reference to Figure 1 which illustrates the operation of a known universal motor construction having a pair of permanent braking magnets. When a universal motor is powered with an AC supply signal, alternate half cycles of the AC signal result in the generation of magnetic flux by the armature windings that opposes the permanent magnet field which thus demagnetizes certain types of permanent magnet materials, such as ceramic and bonded neodymium iron boron (NIB). The demagnetization of the brake magnets weakens the permanent magnet field and thereby degrades dynamic brake performance. In addition, motor performance during such alternate half cycles of the AC signal is also degraded through loss of power. In particular, as shown in the exemplary motor construction illustrated in Figure 1, the magnetic flux generated by the armature windings during the negative half cycle of the AC supply is opposed by the field generated by the permanent brake magnets. As a result, the operating conditions for the motor are no longer optimized, causing power loss. Another cause of power loss results from the increased armature and brake magnet temperature caused by the eddy currents that result from the rapid cycling of the AC supply signal. More specifically, as the input voltage continuously cycles back and forth from positive to negative, the permanent magnet segments are subjected to a high degree of change of flux versus time. This induces high eddy currents in the permanent brake magnets as well as the armature, giving rise to overheating and further power loss.

Finally, there has been a problem ensuring that the permanent magnet segments remain properly secured to the stator over the life of the motor.

According to a first aspect of the present invention, a universal series wound motor, adapted for connection to an ac power source, comprises a substantially tubular stator having two radially opposed stator poles and field winding wound around each stator pole. An armature is mounted for rotation between the stator poles and has armature windings wound thereon. A first circuit means short circuits the armature when electrical energy to the motor is interrupted. At least one permanent magnet segment is secured to one of the stator poles to define an air gap between the permanent magnet segment and the armature. A second circuit controls the supply of electrical energy to the motor and includes rectifier means connected to the ac power source for converting the ac signal to a dc signal.

According to this aspect of the present invention, some of the disadvantages of the prior art have been solved by providing an electrical motor having a permanent magnet brake segment and a rectified power supply. In particular, by eliminating the continuous change in polarity of the AC line signal, the overheating problem of the permanent magnets and armature caused by the eddy current losses is avoided. In addition, the armature flux and permanent magnet flux in the run mode of operation are in the same direction thereby increasing the power output of the motor. Finally, because the rectifier eliminates the concern regarding demagnetization of the permanent magnets, less expensive rare earth magnets can be employed.

According to a second aspect of the invention for improved retention of a permanent magnet segment in a slot in a universal motor stator pole, an electric motor comprises a substantially tubular stator having two radially opposed stator poles and field windings wound around the stator pole. An armature has armature windings wound thereon and mounted for rotation between the stator to define a first air gap between the armature and arcuate surfaces of the stator poles. A first circuit short circuits the armature when electrical energy to the motor is interrupted. A permanent magnet segment is mounted in a slot in each stator pole and defines interstices between the permanent magnet segment and the sidewalls of the slots. This aspect of the invention is characterized in that the slot has an opening with a width that is smaller than the internal width of the slot. And, a zinc-based bonding compound that is injected into the interstices secures the permanent magnet segments in the slots. This second aspect of the invention provides unique means for insuring that the permanent brake magnet are securely retained in the stator of the motor to overcome problems encountered in the prior art.

According to a third aspect of the invention, a method is provided for constructing a universal series wound motor comprising a substantially tubular stator having two radially opposed stator poles and a field winding wound around each stator pole. An armature is mounted for rotation between the stator poles and comprises a magnetizable core constructed from a stacked plurality of laminations and has armature windings wound thereon. The motor has a specified power rating when the armature is constructed from a predetermined grade of electrical steel and with a predetermined number of laminations of a predetermined thickness. The method comprises steps of providing at least one permanent magnet segment that is secured to one of the stator poles to define an air gap between the permanent magnet segment and the armature. The permanent magnet segment creates eddy current losses in the armature. The improvement provided by the third aspect of the invention is characterized by the step of reducing the thickness of the armature laminations from the predetermined thickness and increasing the number of laminations from the predetermined number to reduce the eddy current loss in the armature by an amount sufficient to offset the increase attributable to the permanent magnet segment.

According to the third aspect of the invention, the laminations are preferably formed from sheet stock steel having a thickness of no more than approximately 0.47mm and a core loss of no more than 2-3 watts per pound.

According to a still further feature of the third aspect of the invention, the laminations are sufficiently thin such that the eddy current loss is insufficient to cause, when the motor is connected to the power source and operated at the specified power rating, a temperature rise from ambient in excess of 85°c.

In addition, the preferred embodiment of the present invention discloses unique means for ensuring that the permanent brake magnets are securely retained in the stator of the motor.

Additional objects and advantages will become apparent from a reading of the following detailed description of the preferred embodiment which makes reference to the drawings of which:

### Brief Description of the Drawings

Figure 1 is a schematic diagram of a prior art universal motor having permanent magnet braking segments;
Figure 2 is a schematic diagram of a universal motor according to the present invention;
Figure 3 is a plan view of the stator of the universal motor according to the present invention;
Figure 4a is an enlarged view of a permanent magnet braking segment shown in Figure 2 disposed in a first alternative slot configuration in the stator pole;
Figure 4b is an enlarged view of the permanent magnet braking segment disposed in a second alternative slot configuration in the stator pole;
Figure 5 is a circuit diagram of the universal motor according to the present invention in the RUN mode;
Figure 6 is a circuit diagram of the universal motor according to the present invention in the brake mode of operation;
Figure 7 is a plan view of a single lamination of the armature core of the motor; and
Figure 8 is an enlarged prospective view of a pole of the armature core illustrating the laminations in the armature core.

### Detailed Description of the Preferred Embodiment

Referring to Figure 2, a diagrammatical representation of a universal series wound motor according to the present invention is shown. Motors of this type are conventionally used in a wide variety of applications, most commonly in power tools and small appliances. The motor **10** includes an essentially tubular stator **12** having a pair of diametrically opposed inwardly directed stator poles **14** and **16**. The stator poles **14** and **16** define arcuate-shaped pole faces **18** and **20** between which the rotor or armature **22** rotates. The field windings **24** and **26** are wound about each of the respective stator poles **14** and **16**. Wound about the rotor **22** in a conventional manner are the armature windings **28**, which receive electrical power via a pair of brushes **30** and **32** that engage a commutator (not shown) on the rotor **22**. The brushes **30** and **32** are illustrated diagrammatically in Figure 2 and intended to depict the preferred angular positions of the brushes relative to the stator poles **14** and **16**. Obviously, the actual position of the brushes is radially inward from the depicted position in engagement with the commutator mounted on the rotor shaft.

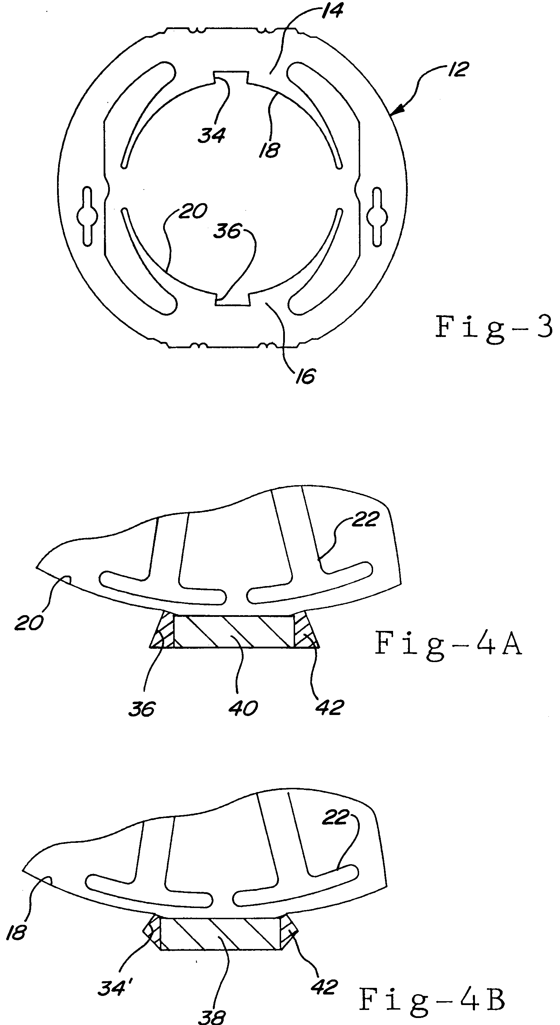

As best shown in Figures 3 and 4a, the stator **12** has formed into each of its pole faces **18** and **20** a channel or slot **34** and **36**. The slots **34** and **36** are preferably wedge-shaped in cross-section so that the width of the slots **34** and **36** at their openings is less than the width of the slots at their base. The slots **34** and **36** are also preferably diametrically opposed and centered in the stator poles **14** and **16**. Mounted in each of the slots **34** and **36** is a longitudinal permanent magnet member, **38** and **40** respectively. In the preferred embodiment the permanent magnet segments **38** and **40** are made from rare earth elements such as neodymium iron boron (NIB). With particular reference to Figure 4a, each of the permanent magnet members **38** and **40** is rectangular in cross-section with a width slightly smaller than the width of the openings to the slots **34** and **36**. The thickness of the permanent magnet segments **38** and **40** is preferably slightly less than the maximum depth of the slots **34** and **36**, such that the exposed face of the magnet segments **38** and **40** when positioned against the base of the slots **34** and **36** is essentially tangent to the arcuate surface of the stator pole faces **18** and **20**. In this manner the air gap between the exposed faces of the permanent magnets **38** and **40** and the rotor **22** is minimized which in turn maximizes the effectiveness of the magnetic field created by the permanent magnets.

The permanent magnetic segments **38** and **40** are secured within the slots **34** and **36** using a metal bonding compound **42** that is injected in a fluid state into the interstices between the permanent magnet segments **38** and **42** and the interior sidewalls of the slots **34** and **36**. Once the bonding compound has hardened, it will be appreciated that the trapezoidal configuration of the slots helps to ensure that the magnets remain precisely positioned within the slots. Additionally, it will be noted as shown in Figure 4a that the metal bonding compound **42** is preferably applied so that it overlaps the exposed surfaces of the magnets **38** and **40** along their marginal edges to further mechanically retain the magnets within the slots **34** and **36**.

An alternative preferred slot configuration is illustrated in Figure 4b. In this embodiment, the base of the slot **34'** is reduced in dimension to substantially correspond to the width of the permanent magnet segment **38** to facilitate proper centering of the magnet **38** within the slot **34'**. The interstices between the magnet **38** and the sidewalls of the slot **34'** are filled with the same injected metal bonding material **42** used in the embodiment shown in Figure 4a to retain the magnet segment **38** within the slot **34'**.

With either slot configuration shown in Figures 4a and 4b, it may be sufficient in some motor applications to apply the injected metal bonding compound **42** so that when hardened it is substantially flush with the exposed surfaces of the magnet segments **38** and **40**. In addition, it is generally desirable with either of the alternative slot configurations shown in Figures 4a and 4b to have the metal bonding compound **42** overlap the axial end portions of the permanent magnet segments **38** and **40**.

Due to the relatively severe environment, the injected metal bonding material used in the preferred embodiment comprises a zinc-based compound known commercially as "Zamak" and sold by the Fishertech Division of Fisher Gauge Limited in Petersborough, Ontario, Canada. This bonding material is particularly suited to withstand the harsh conditions to which the motor may be subjected and still retain the permanent magnet segments **38** and **40** in their precise positions. More specifically, when used in a power tool, for example, the motor may be subjected to severe jolting such as when the power tool is dropped. In addition, it is desirable from a safety standpoint to ensure that the permanent magnet segments remain securely retained in the slots even in a thermal runaway condition when the motor can attain temperatures in excess of 250°C. Consequently, it is important in the preferred embodiment that the injected metal bonding agent **42** have stable mechanical characteristics at high temperatures and a melting point substantially greater than 250°C. In addition, it is preferred that the rough exterior surfaces of the permanent magnet segments **38** and **40**, which result from a sintering process used in their manufacture and which are commonly removed, be retained to enhance the mechanical bond between the metal bonding compound **42** and the magnets.

A further alternative method of securely retaining the permanent magnet segments to the stator poles is described and illustrated in the copending U.S. application of William R. Stumpf, entitled "Motor With Permanent Magnet Actuated Brake", and also assigned to the same assignee as the present application.

Returning to Figure 2, the permanent magnet segments are magnetized so that the north pole (N) of permanent magnet segment **38** and the south pole (S) of permanent magnet segment **40** are adjacent to the rotor **22**. Consequently, if it is presumed that the direction of rotation of the motor in the RUN mode is clockwise relative to Figure 2, it will be appreciated that the flux from the main field windings **24** and **26** (designated by the solid lines **44**) and the flux attributable to the permanent magnet segments **38** and **40** (designated by the dashed lines **46**) are in the same direction, thereby optimizing motor performance.

As previously noted, the operating condition illustrated in Figure 2 would exist with the known universal motor construction described in the Behrens et al. patent, No. 5,087,845, only during alternate half cycles of the AC waveform. During the other alternate half cycles of the AC waveform, the direction of the flux from the main field windings would, of course, reverse and thus be opposed by the flux from the permanent magnets as shown in Figure 1. The present invention overcomes this drawback of the prior art by energizing the motor through a full-wave rectifier circuit to prevent the continuous switching of polarity in the drive signal and the concomitant changes in the direction of the main flux lines.

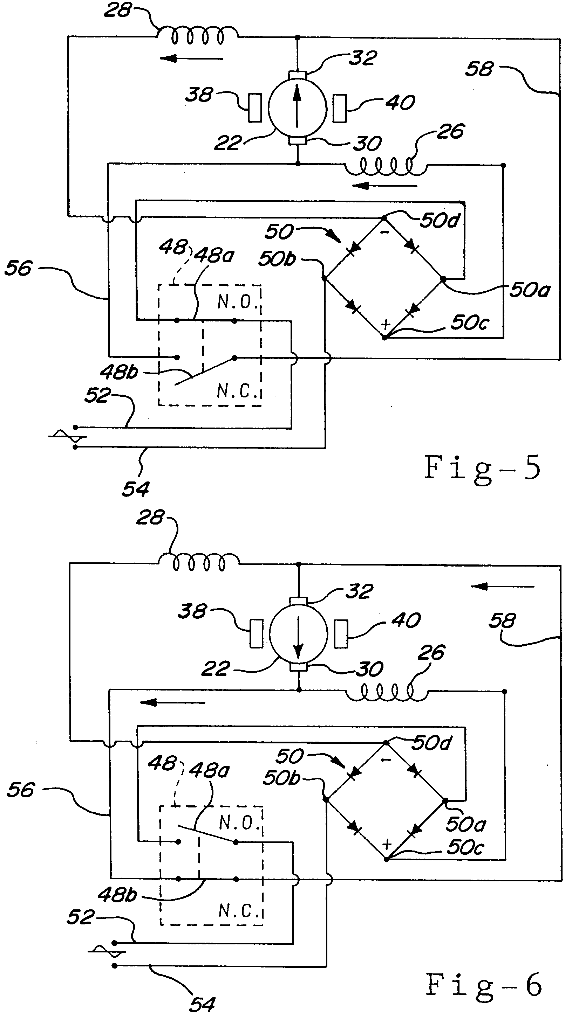

Turning now to Figure 5, a circuit diagram of a universal series wound motor according to the present invention is shown. Power to the armature **22** is via the two brushes **30** and **32** and the commutator (not shown). The two field windings **26** and **28** are respectively connected to the brushes **30** and **32**. Energization of the motor is controlled by a switch assembly **48** comprising a normally open single-pole, single-throw switch **48a** and a normally closed single-pole, single-throw switch **48b**. The common terminal of the normally open switch **48a** is connected to the AC supply line **52** and the switching terminal of the normally open switch **48a** is connected to one side **50a** of a full-wave rectifier circuit **50**. The other side **50b** of the full-wave rectifier **50** is connected to the return AC supply line **54**. The positive terminal (+)**50c** of the rectifier circuit is connected to field winding **26** and the negative terminal(-)**50d** is connected to field winding **28**. Thus, in the RUN mode when the normally open switch **48a** is closed and the normally closed switch **48b** is opened, current flow during both the positive and negative half cycles of the AC waveform is from positive supply terminal **50c**, through field winding **26**, to brush **30**, armature **22**, brush **32** and field winding **28**, to negative supply terminal **50d**.

In order to dynamically brake the motor, it is necessary to short-circuit the armature when power to the motor is interrupted. This circuit condition is illustrated in Figure 6. Power to the motor is interrupted when normally open switch **48a** is opened and normally closed switch **48b** is closed. A first lead **56** connects brush **30** to the switching contact of normally closed switch **48b** and a second lead **58** connects brush **32** to the common contact of normally closed switch **48b**. Thus, in the circuit condition illustrated in Figure 6, the armature is short circuited and, due to the back EMF of the motor, current flows through the armature in a direction opposite to that produced in the RUN condition, thereby dynamically braking the motor. Moreover, the amount of braking current is substantially predetermined by the permanent magnet segments **38** and **40** which generate a substantially predetermined "remnant" magnetic field. Accordingly, the degree of dynamic braking achieved is much more predictable and repeatable than with conventional dynamic braking techniques. Moreover, the excessive arcing problem between the brushes and the commutator associated with conventional dynamic braking techniques which can significantly reduce brush life is substantially eliminated by the present invention due to the controlled level of braking current. In addition, due to the rectification of the AC supply signal the potential overheating problem of the permanent magnets and the armature is eliminated, and the possible demagnetization of the permanent magnets is avoided.

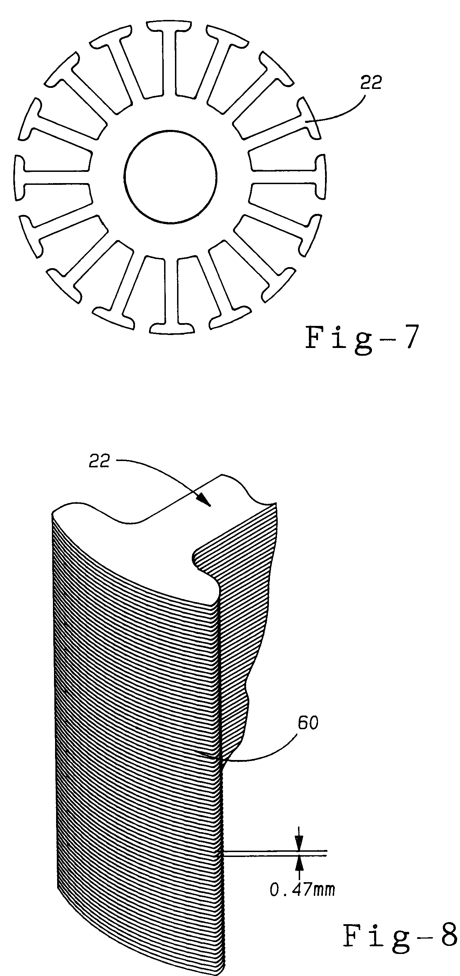

A further embodiment of an electric motor having a permanent magnet brake is shown in Figures 7 and 8. This embodiment is intended to be used either in combination with or as an alternative to the rectifier described in the previous embodiments.

As discussed above, a significant increase in eddy currents is generated in the armature of the motor when permanent magnets are employed in the manner proposed. This increase in eddy currents is manifested as a temperature increase in the laminations **60** of the armature **22**. Since the armature's laminations **60** serve as a major heat sink for the armature windings, the resulting increase in the temperature of the armature windings has a significant impact on the performance rating of the motor.

In particular, motor rating standards, such as the European CENELEC HD-400 specification, require that the rated output of a motor cannot cause a temperature increase above ambient of more than 85°C. Consequently, increased heat build-up in the armature can necessitate a reduced power rating for the motor. As a result, for a motor with a given power rating, it is desirable to keep any temperature rise in the armature associated with the addition of the permanent magnet brake less than 85°C above ambient.

The previous embodiments solve this problem with the addition of a full wave rectifier circuit which substantially eliminates the increase in eddy currents by preventing the magnetic reversal of the field. However, it has additionally been determined that acceptable reductions in eddy current losses can be realized by appropriate core material selection and by decreasing the thickness of the armature's laminations.

More particularly, due to various cost and manufacturing considerations, core laminations **60** are typically manufactured from so-called "electrical grade" steel which exhibits a core loss of approximately 8 watts/pound. In addition, conventional laminations are typically formed from 24-gauge stock, which is approximately 0.65 mm thick. Use of this gauge stock is particularly advantageous in stamping operations, as it extends the life of the dies and thereby minimizes manufacturing costs.

However, it is known that eddy current losses in a core can be reduced by increasing the resistivity of the core material. In addition, when the cross-section of a core has been partitioned to reduce eddy currents, as is done most commonly, core loss per unit volume can be reduced by reducing the thickness of the laminations and increasing proportionately the number of laminations.

In the present application, it has been found that the additional eddy current losses attributable to the addition of the permanent magnet braking members can be substantially offset by changing the grade of the steel used to manufacture the armature core and by reducing the thickness of the armature laminations **60**. More particularly, in a preferred embodiment of the present invention, the armature core laminations **60** are formed from an M-43 grade steel with a higher silicon content than conventional electrical grade steel, which exhibits a core loss of no more than approximately 2 - 3 watts/pound. Additionally, the thickness of the laminations is reduced to no more than approximately 0.47 mm and the number of laminations is preferably increased proportionately. In an exemplary embodiment, the resulting number of laminations is increased from 61 using stock 24-gauge steel to 85 using the M-43 grade 26-gauge steel. The resulting reduction in eddy current losses achieved by these modifications to the armature core substantially offset the eddy current losses attributable to the addition of the permanent magnet braking members. Consequently, the rated performance of the motor is not adversely effected by the addition of the permanent magnet brake feature, as the temperature rise above ambient of the armature as the rated output of the motor is maintained below 85°C. Moreover, no additional components are required to achieve this result. Accordingly, the cost of implementing the permanent magnet braking function is minimized. As noted previously, this technique of reducing eddy current losses in the armature can be used alternatively or in combination with the rectification technique described above.

Finally, it will be appreciated that the present invention is readily usable in combination with the auxiliary brake winding technique described in U.S. Patent No. 5,063,319 if more aggressive braking action is desired. In particular, by combining both dynamic braking techniques, a very rapid stopping time results which may be of particular benefit in certain applications, such as in electric hedge trimmers. Moreover, the addition of the present permanent magnet braking technique to the auxiliary wound brake approach ensures effective braking action even when power is interrupted when the supply voltage is at or near zero and there would otherwise be little resulting residual magnetic field.

While the above description constitutes the preferred embodiments of the invention, it will be appreciated that the invention is susceptible to modification, variation, and change without departing from the proper scope or fair meaning of the accompanying claims.

## Claims

1. A universal series wound motor adapted for connection to an AC power source and comprising:
a substantially tubular stator having two radially opposed stator poles and a field winding wound around each stator pole;
an armature mounted for rotation between said stator poles and having armature windings wound thereon;
first circuit means for short-circuiting said armature when electrical energy to said motor is interrupted;
at least one permanent magnet segment secured to one of said stator poles so as to define an air gap between said permanent magnet segment and said armature; characterized by:
second circuit means for controlling the supply of electrical energy to said motor and including rectifier means connected to the AC power source for converting the AC supply signal to a DC signal.

2. The motor of claim 1 including a permanent magnet segment secured to each of said stator poles.

3. The motor of claim 2 wherein said permanent magnet segments are mounted in slots formed in said stator poles.

4. The motor of claim 3 wherein said permanent magnet segments are secured in said slots by an injected metal bonding compound.

5. The motor of claim 4 wherein said bonding compound is zinc-based.

6. The motor of claim 3 wherein said slots are substantially trapezoidal in cross-section with the width of the openings to said slots smaller than the width of the bases of said slot.

7. The motor of claim 6 wherein said permanent magnet segments are substantially rectangular in cross-section with a width slightly less than the width of the openings to said slots.

8. The motor of claim 7 wherein interstices are defined between said permanent magnet segments and the sidewalls of said slots when said permanent magnet segments are mounted in said slots and further wherein a metal bonding compound is injected into said interstices to secure said permanent magnet segments in said slots.

9. The motor of claim 8 wherein said bonding compound is zinc-based.

10. An electric motor comprising:
a substantially tubular stator having two radially opposed stator poles and field windings wound around said stator poles, each of said stator poles defining a radially inwardly directed arcuate surface having formed therein a slot;
an armature having armature windings wound thereon and mounted for rotation between said stator poles so as to define a first air gap between the armature and the arcuate surfaces of said stator poles;
first circuit means for short-circuiting said armature when electrical energy to said motor is interrupted;
a permanent magnet segment mounted in each of said slots in said stator poles and defining interstices between said permanent magnet segments and the sidewalls of said slots; characterized by:
a zinc-based bonding compound that is injected into said interstices for securing said permanent magnet segments in said slots; and
the slot defining an opening with a width that is smaller than an internal width of the slot.

11. The motor of claim 10 wherein a second air gap is defined between said permanent magnet segments and said armature.

12. The motor of claim 11 wherein said second air gap is substantially equal to said first air gap.

13. The motor of claim 12 wherein said slots are substantially trapezoidal in cross-section.

14. The motor of claim 13 wherein the width of said permanent magnet segments is slightly less than the width of the openings to said slots.

15. The motor of claim 10 characterized by:
second circuit means adapted for connecting the motor to an AC power source and including rectifier means connected to said AC power source for converting said AC supply signal to a DC signal.

16. The motor of claim 12 wherein each of said slots is configured such that in cross-section the width of the opening to the slot is slightly greater than the width of said permanent magnet segment, the width of the base of the slot is substantially equal to the width of said permanent magnet segment to facilitate the centering of said permanent magnet segment in said slot, and the width of the slot intermediate said opening and said base is greater than the width at said opening.

17. A method of constructing a universal series wound motor comprising a substantially tubular stator having two radially opposed stator poles and a field winding wound around each stator pole and an armature mounted for rotation between said stator poles and comprising a magnetizable core constructed from a stacked plurality of laminations and having armature windings wound thereon, said motor having a specified power rating when said armature is constructed from a predetermined grade of electrical steel and with a predetermined number of laminations of a predetermined thickness; the method comprising:
providing at least one permanent magnet segment that is secured to one of said stator poles so as to define an air gap between said permanent magnet segment and said armature, said permanent magnet segment creating eddy current losses in said armature; characterized by:
reducing the thickness of said armature laminations from said predetermined thickness and increasing the number of laminations from said predetermined number so as to reduce the eddy current losses in said armature by an amount sufficient to offset the increase attributable to said permanent magnet segment.

18. The method of claim 17 characterized by:
the step of changing the armature laminations from said standard grade of electrical steel to a grade of steel having a loss of no more than approximately 2 - 3 watts per pound.

19. A universal series wound motor adapted for connection to a power source and comprising:
a substantially tubular stator having two radially opposed stator poles and a field winding wound around each stator pole;
an armature mounted for rotation between said stator poles and comprising a magnetizable core constructed from a stacked plurality of laminations and having armature windings wound thereon; and
a pair of permanent magnet segments secured to said stator poles so as to define an air gap between said permanent magnet segments and said armature, said permanent magnets providing a predetermined magnetic field between said stator and said rotor upon interruption of power from said power source to dynamically brake rotation of said armature;
characterized in that said laminations are formed from sheet stock steel having a thickness of no more than approximately 0.47 mm and a core loss of no more than approximately 2 - 3 watts per pound;

20. The motor of claim 19 wherein said permanent magnet segments are secured in slots formed in said stator poles by an injected metal bonding compound.

21. A universal series wound motor adapted for operation at a specified power rating and for connection to a power source and comprising:
a substantially tubular stator having two radially opposed stator poles and a field winding wound around each pole;
an armature mounted for rotation between said stator poles and comprising a magnetizable core constructed from a stacked plurality of laminations;
said field windings creating winding eddy current losses in said armature;
a permanent magnet segment secured to one of said poles so as to define an air gap between said segment and armature, said permanent magnet segment creating magnet eddy current losses in said armature;
characterized in that said laminations are sufficiently thin such that the combined winding and magnet eddy current losses are insufficient to cause, when said motor is connected to said power source and operated at said power rating, a temperature rise from ambient in excess of 85°C.
